# EUROPEAN PATENT SPECIFICATION

(11) **EP 3 439 895 B1**
(45) Date of publication and mention of the grant of the patent: **04.03.2020**
(21) Application number: 17715490.3
(22) Date of filing: 05.04.2017
(51) Int. Cl.: B60B 21/12, B60C 23/00

(54) **A CONNECTION DEVICE FOR AN AXLE OF A VEHICLE**
VERBINDUNGSVORRICHTUNG EINER FAHRZEUGACHSE
DISPOSITIF DE RACCORDEMENT POUR UN ESSIEU D'UN VÉHICULE

(30) Priority: 05.04.2016 IT UA20162296
(43) Date of publication of application: 13.02.2019
(73) Proprietor: CNH Industrial Italia S.P.A., 10135 Turin (IT)
(72) Inventor: BENEVELLI, Alessandro, 42020 Albinea Reggio Nell"Emilia (IT); FIORATI, Stefano, 44028 Poggio Renatico (Ferrara) (IT); FERRARI, Fabrizio, Cap 41125 Modena (IT)
(74) Representative: CNH Industrial IP Department
(86) International application number: PCT/EP2017/058087
(87) International publication number: WO 2017/174646

(56) References cited:
- WO-A1-2016/001349
- US-B1- 6 325 123

## Description

The invention relates to a connection device to be used in an axle of a vehicle, particularly an industrial or agricultural vehicle such as a tractor. The connection device according to the invention is intended to connect a non-rotatable part of the vehicle with a rotatable part thereof, while allowing a fluid to flow from the non-rotatable part to the rotatable part or vice versa.

The connection device according to the invention is particularly suitable for being associated with a tyre inflation system by means of which a vehicle tyre can be automatically inflated or deflated in order to maintain a preset pressure value inside the corresponding wheel.

Tyre inflation systems are known which periodically monitor pressure inside the tyres and, if pressure inside a tyre differs from a threshold value, automatically inflate or deflate the tyre concerned to reach inside the latter a pressure value which is as close as possible to the threshold value. Tyre inflation systems have become more and more appreciated in recent times, because they ensure that an optimal pressure is maintained inside a wheel. This has many positive effects, such as that of reducing fuel consumption and improve safety of the vehicle. US6325123 and WO2016001349 disclose different type of tyre inflation systems with a first annular sealing and a second annular sealing arrangement and annular dust seal.

It is therefore desirable that both existing tractors and newly designed tractors may be equipped with tyre inflation systems.

In order that a tyre may be inflated by a tyre inflation system, pressurized air has to be sent from a non-rotatable component of the vehicle, e.g. a support for supporting a wheel hub, to a rotatable component of the vehicle. The rotatable component is fixed relative to the tyre and may be, for example, a wheel hub.

Rotary seals have to be provided at an interface between the rotatable component and the non-rotatable component, in order to prevent air leaks at the interface. The rotary seals are one of the most critical components of tyre inflation systems, mainly due to their relatively short lifetime.

Furthermore, installation of rotary seals on existing tractors may be rather complicated, because of the narrow spaces that are available to house the rotating seals.

An object of the invention is to provide a connection device for allowing a non-rotatable part of a vehicle, particularly an industrial or agricultural vehicle such as a tractor, to be connected to a rotatable part of the vehicle, while ensuring that a fluid, particularly pressurized air, may flow from the non-rotatable part to the rotatable part, or vice versa.

A further object is to provide a connection device that is capable of preventing fluid leaks between the rotatable part and the non-rotatable part.

Another object is to provide a connection device having a quite compact structure, so that the overall dimensions of the connection device can be minimized.

Still another object is to provide a connection device that can easily be installed even on existing vehicles, without requiring excessive changes in the existing components of the vehicle.

According to the invention, there is provided a connection device intended to be used in a vehicle having at least one wheel provided with a tyre, the connection device comprising:
- a rotatable part intended to be installed in a fixed position relative to the wheel, the rotatable part extending around an axis;
- a non-rotatable part for rotatingly supporting the rotatable part, the non-rotatable part extending around said axis and being at least partially surrounded by the rotatable part;
- an annular chamber defined between the rotatable part and the non-rotatable part, the annular chamber allowing fluid communication between at least one conduit provided in the rotatable part and at least one duct provided in the non-rotatable part, so that the tyre may be inflated by sending pressurized air from the non-rotatable part to the rotatable part;
- a first annular sealing arrangement and a second annular sealing arrangement delimiting the annular chamber, the first annular sealing arrangement being located at a first diameter around said axis, the second annular sealing arrangement being located at a second diameter around said axis, the first diameter being different from the second diameter, wherein the first annular sealing arrangement comprises a first annular air seal and the second annular sealing arrangement comprises a second annular air seal, the first annular air seal and the second annular air seal at least partially delimiting the annular chamber, the first annular air seal and the second annular air seal being configured to prevent air leaks from the annular chamber, and said connection device further comprising
- an annular dust seal located radially externally of the second sealing arrangement at an interface region between the non-rotatable component and the rotatable component, so as to prevent dust from contaminating the second annular air seal characterised in that a lubricant chamber is defined in a position adjacent to the annular dust seal, the lubricant chamber being configured to contain a lubricant in order to keep the annular dust seal lubricated

The first annular sealing arrangement and the second annular sealing arrangement by preventing air leaks between the non-rotatable part and the rotatable part during operation, allow the tyre therefore to be inflated in an effective manner.

Furthermore, by positioning the first annular sealing arrangement and the second annular sealing arrangement at respective diameters that differ from one another, a connecting device having a quite compact structure may be obtained. This is due to the fact that pressurized air used to inflate the tyre may follow a path which does not extend solely along said axis, but also has a portion extending transversely to said axis. The axial dimensions of the connecting device may therefore be kept limited.

As a consequence, the connecting device may be easily installed even on existing tractors.

In an embodiment, the first annular sealing arrangement comprises a first annular air seal delimiting the annular chamber, the first annular air seal being configured to prevent air leaks from the annular chamber.

The second annular sealing arrangement comprises a second annular air seal delimiting the annular chamber. The second annular air seal is configured to prevent air leaks from the annular chamber.

In an embodiment, the first annular sealing arrangement comprises a first annular oil seal.

The first annular air seal is interposed between the annular chamber and the first annular oil seal.

The first annular oil seal faces a space defined between a hub of the wheel and a support for supporting the hub.

A bearing arrangement is housed in said space for allowing the hub to rotate relative to the support.

The first annular oil seal is configured to prevent oil lubricating the bearing arrangement from contaminating the first annular air seal.

The first annular oil seal allows the first annular air seal to be kept in a clean and dry environment, so that lifetime of the first annular air seal can be considerably increased.

In an embodiment, a vent passage is provided for providing fluid communication between the first annular oil seal and an external environment.

The vent passage ensures that no overpressure is generated on the first annular oil seal and hence in the space defined between the hub and the corresponding support.

In an embodiment, the connection device further comprises an annular dust seal interposed between the non-rotatable part and the rotatable part.

The annular dust seal is arranged radially externally of the second annular air seal, so as to prevent dust and dirt from contaminating the second annular air seal.

A lubricant chamber, particularly a grease chamber, is provided internally of the annular dust seal.

The grease chamber is configured to house grease for lubricating the annular dust seal.

Grease contained in the grease chamber ensures proper working of the annular dust seal.

In an embodiment, the second annular sealing arrangement comprises a second annular oil seal interposed between the second annular air seal and the grease chamber, so as to prevent grease present in the grease chamber from contaminating the second annular oil seal.

It is thus ensured that the second annular oil seal works in a clean and dry environment, with a consequent increase in its lifetime.

The invention will be better understood and carried out with reference to the attached drawings, that show some exemplifying and non limiting embodiments thereof, in which:
Figure 1 is a cross section, showing a connection device associated to a front axle of a vehicle;
Figure 2 shows an enlarged detail of Figure 1;
Figure 3 shows an enlarged further detail of Figure 1, taken along a different plane passing through an axis of the connecting device;
Figure 4 is a cross section, showing a connection device associated to a rear axle of a vehicle;
Figure 5 shows an enlarged detail of Figure 4;
Figure 6 shows in detail a sealing arrangement of the connection device of Figure 4.

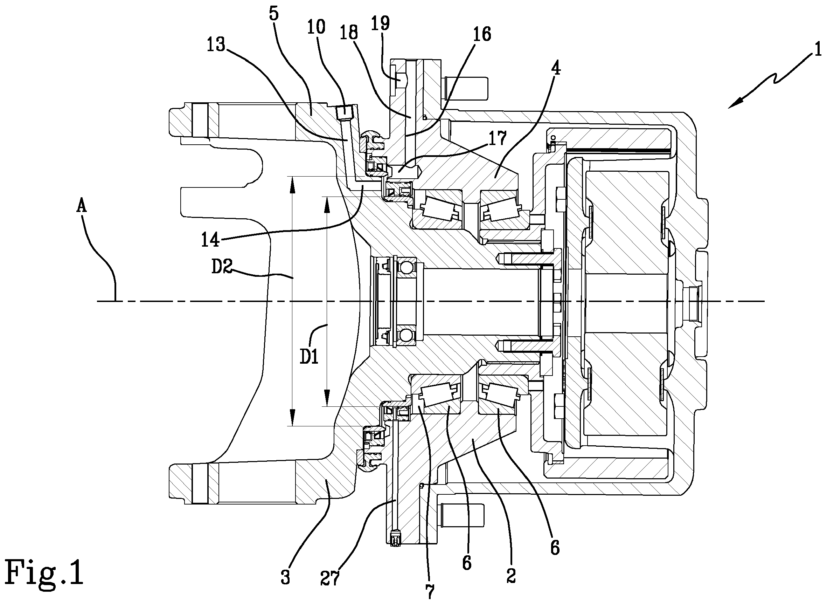

Figure 1 shows a connection device 1 to be used in a vehicle, particularly in an industrial or agricultural vehicle such as a tractor. The connection device 1 connects a rotatable part 2 of the vehicle with a non-rotatable part 3 of the vehicle. In the illustrated example, the rotatable part 2 comprises a hub 4 of a wheel of the vehicle, the hub 4 being fixed relative to the wheel. The non-rotatable part 3 comprises, on the other hand, a support 5 for rotatingly supporting the hub 4. The support 5 is installed in a stationary position on the vehicle.

Both the hub 4 and the support 5 extend around an axis A.

The support 5 is at least partially surrounded by the hub 4.

Between the hub 4 and the support 5 a bearing arrangement is provided, the bearing arrangement allowing the hub 4 to rotate relative to the support 5. The bearing arrangement is housed inside a space 7 defined between the hub 4 and the support 5. The bearing arrangement may comprise a pair of bearings 6 each of which has an outer ring fixed relative to the hub 4 and an inner ring fixed relative to the support 5.

The connection device 1 is associated with a front axle of the vehicle, extending along the axis A. The front axle has an appendage, also extending along the axis A, which is fixed relative to the wheel. The appendage passes inside the support 5 and is rotatable relative to the support 5.

The connection device 1 is associated with a tyre inflation system by means of which the tyres of the vehicle can be automatically inflated or deflated. The tyre inflation system comprises a pump that, by means of a circuit that is not shown, is capable of sending pressurized air into the support 5. More in detail, the support 5 has a duct 10, which is intended to receive pressurized air coming from the pump of the tyre inflation system, and to direct the pressurized air towards the hub 4. The duct 10 may comprise a transverse portion 13, which is arranged transversely to the axis A, and an axial portion 14, which is parallel to the axis A.

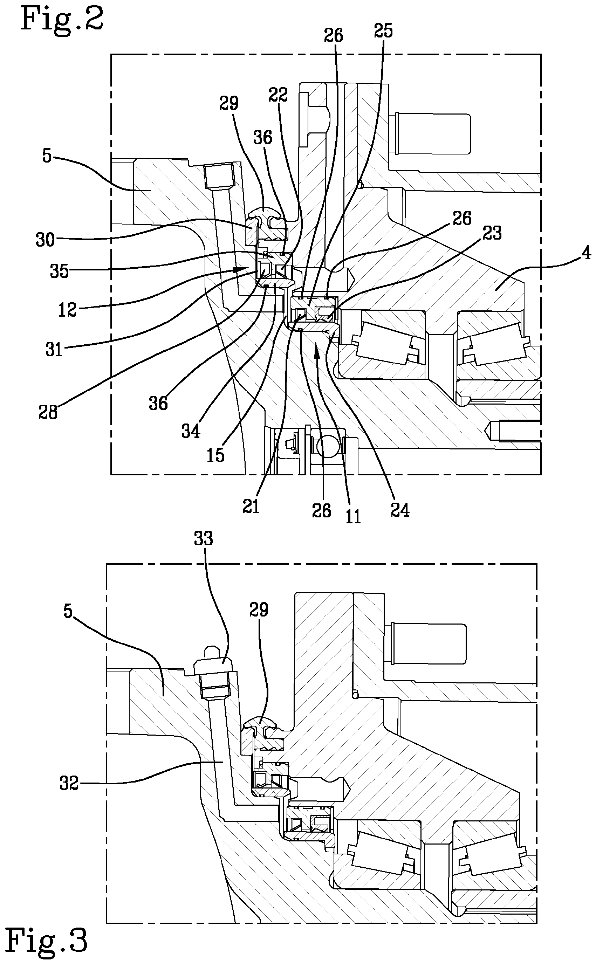

An annular chamber 15, better visible in Figure 2, is defined between the support 5 and the hub 4, so as to receive pressurized air from the duct 10. To this end, the duct 10, and in particular the axial portion 14 thereof, opens into the annular chamber 15.

The hub 4 has a conduit 16, which from the annular chamber 15 is directed to the outside of the hub 4, so as to send pressurized air towards the tyre to be inflated. The conduit 16 may comprise an initial portion 17, a final portion 19 and an intermediate portion 18 interposed between the initial portion 17 and the final portion 19. In the example shown, the initial portion 17 and the final portion 19 are parallel to the axis A, whereas the intermediate portion 18 is arranged transversely, in particular perpendicularly, to the axis A. The initial portion 17 opens into the annular chamber 15, whereas the final portion 19 is arranged in a proximal position to the tyre.

The annular chamber 15 therefore allows fluid communication between the duct 10 and the conduit 16. The annular chamber 15 is filled with pressurized air coming from the duct 10 and, as the hub 4 rotates, allows pressurized air to enter the conduit 16 in order to inflate the tyre mounted on the hub 4.

The annular chamber 15 extends around the axis A.

The connection device 1 comprises a first annular sealing arrangement 11 and a second annular sealing arrangement 12 delimiting the annular chamber 15, so as to prevent pressurized air to escape from the annular chamber 15 at undesired locations. The first annular sealing arrangement 11 extends around the axis A and has a first sealing diameter D1, shown in Figure 1. The first annular sealing arrangement 11 exerts a sealing action along a circumference having a diameter which is equal to the first sealing diameter D1. Also the second annular sealing arrangement 12 extends around the axis A, i.e. is coaxial with the first sealing arrangement 11. However, the second annular sealing arrangement 12 has a second sealing diameter D2 that is different from the first sealing diameter D1. In particular, the first sealing diameter D1 may be smaller than the second sealing diameter D2. The second sealing diameter D2 is the diameter of the circumference along which the first annular sealing arrangement exerts a sealing action.

The first sealing diameter D1 can be in particular considered as an inner diameter of the first annular sealing arrangement 11, while the second sealing diameter D2 is an inner diameter of the second annular sealing arrangement 12.

The first sealing arrangement 11 and the second sealing arrangement 12 are arranged in sequence along the axis A.

As shown in Figure 2, the first annular sealing arrangement 11 comprises a first annular air seal 21, which delimits the annular chamber 15 and is configured to avoid air leaks from the annular chamber 15 towards the space 7. Similarly, the second annular sealing arrangement 12 comprises a second annular air seal 22, which also delimits the annular chamber 15 so as to prevent air leaks from the annular chamber 15 towards the support 5.

Both the first annular air seal 21 and the second annular air seal 22 are rotary seals, i.e. seals that are adapted to exert a sealing action while being interposed between a rotatable component and a non-rotatable component.

The first sealing arrangement 11 further comprises a first annular oil seal 23, of the radial type, which faces the space 7 in order to prevent oil leaks from the space 7 towards the first annular air seal 21. Oil is present in the space 7 since it has the function of lubricating the bearings 6. If oil from the space 7 reached the first annular air seal 21, the latter would deteriorate rather rapidly. Hence, the first annular oil seal 23 keeps the first annular ail seal 21 in a clean and dry environment, so that lifetime of the first annular air seal 21 can be increased.

The first annular oil seal 23 is interposed between the first annular air seal 21 and the space 7. In other words, the first annular air seal 21 is located closer to a centerline of the vehicle than the first annular oil seal 23. The latter is in a more external position, i.e. in a position closer to the wheel than the first annular air seal 21.

The first annular air seal 21 and the first annular oil seal 23 are interposed between an inner seat 24 and an outer seat 25. Both the inner seat 24 and the outer seat 24 have an annular conformation.

The inner seat 24 is fixed relative to the support 5. The outer seat 25, on the other hand, is fixed relative to the hub 4.

Between the inner seat 24 and the support 5, as well as between the outer seat 25 and the hub 4, a plurality of sealing rings 26, particularly conformed as O-rings, are interposed. The sealing rings 26 avoid undesired fluid leaks between the inner seat 24 and the support 5, as well as between the outer seat 25 and the hub 4. Furthermore, the sealing rings 26 help the inner seat 24 and the outer seat 25 to remain in the proper position relative to the support 5 and to the hub 4 respectively.

The inner seat 24 and the outer seat 25 are positioned at a shoulder obtained on the support 5. However, neither the inner seat 24, nor the outer seat 25, are in contact with a surface delimiting the shoulder transversely to the axis A. The annular chamber 15 is actually defined between the surface delimiting the shoulder transversely to the axis A and the assembly formed by the inner seat 24, the outer seat 25 and the first annular air seal 21.

The inner seat 24 is delimited by an outer surface which is substantially cylindrical and smooth. Both the first annular air seal 21 and the first annular oil seal 23 have a respective lip which is in contact with the outer surface of the inner seat 24. The lips of the first annular air seal 21 and of the first annular oil seal 23 rotate on the outer surface of the inner seat 24, as the hub 4 rotates relative to the support 5.

The lip of the first annular air seal 21 has a diameter that is equal to the first sealing diameter D1. In the example shown, also the lip of the first annular oil seal 23 has a diameter that is equal to the first sealing diameter D1.

The outer seat 25 has a radial projection which project towards the inner seat 24 and, in use, is interposed between the first annular air seal 21 and the first annular oil seal 23, so as to keep the first annular air seal 21 and the first annular oil seal 23 spaced from one another.

As shown in Figure 1, a vent passage 27 is provided for preventing high pressure from generating near the first annular oil seal 23. If any leak of pressurized air occurred from the first annular air seal 21, for example due to a damage of the latter, pressurized air would reach the first annular oil seal 23 and subsequently the space 7, because the first annular oil seal 23 is not designed to exert a sealing action with respect to pressurized air. An overpressure would consequently be generated in the space 7, which is not vented.

Owing to the vent passage 27, any pressurized air present between the first annular air seal 21 and the first annular oil seal 23 can be discharged to the external environment, before deforming the first annular oil seal 23 and reaching the space 7. The vent passage 27 provides a fluid communication between the first annular oil seal 23 and the external environment.

The vent passage 27 may be shaped as a hole made in the hub 4 and reaching an interface between the outer seat 25 and the hub 4.

The connection device 1 further comprises a dust seal 29 for preventing dust and other relatively large dirt particles from penetrating between the hub 4 and the support 5. The dust seal 29 has an annular conformation and may be located at an interface between the hub 4 and a ring 30 fixed relative to the support 5.

The dust seal 29 has a head, which can be shaped as a mushroom if seen in a cross-section, projecting from the hub 4. A portion of the head of the dust seal 29 extends over the hub 4, whereas a further portion of such head extends over the ring 30.Thus, the dust seal 29 prevents dust from penetrating between the hub 4 and the ring 30.

The dust seal 29 further has a side projection engaging in a groove made in the hub 4, for retaining the dust seal 29 in a proper position.

The dust seal 29 is located in a position which is radially external relative to the position of the second sealing arrangement 12. The dust seal 29 is concentric with the second sealing arrangement 12.

In order to work properly, the dust seal 29 should be lubricated. To this end, a lubricant chamber 31 may be associated with the dust seal 29, so that lubricant contained in the lubricant chamber 31 may lubricate the dust seal 29. The lubricant contained in the lubricant chamber 31 may be for example grease.

The lubricant chamber 31 is interposed between the support 5 and the hub 4, in a region of the hub 4 in which the second sealing arrangement 12 is housed.

The lubricant chamber 31 may be fed with lubricant, particularly grease, by means of a feeding conduit 32, shown in Figure 3, which passes through the support 5 and opens into the lubricant chamber 31.

A greaser 33 may be fastened to an introductory portion of the feeding conduit 32 in order to send grease into the feeding conduit 32 and hence into the lubricant chamber 31.

The second annular sealing arrangement 12 comprises, in addition to the second annular air seal 22, a second annular oil seal 28, which is of the radial type. The second annular oil seal 28 has the function of preventing lubricant, particularly grease, that is contained in the lubricant chamber 31, from reaching the second annular air seal 22. Owing to the second annular oil seal 28, the second annular air seal 22 can work in a clean and dry environment, which makes life of the second annular air seal 22 longer.

The second annular oil seal 28 is interposed between the lubricant chamber 31 and the second annular air seal 22.

The second annular oil seal 28 and the second annular air seal 22 are supported between an internal seat 34 and an external seat 35, which may both shaped as rings. The internal seat 34 is fixed relative to the support 5, whereas the external seat 35 is fixed relative to the hub 4.

Respective sealing rings 36, particularly conformed as O-Rings, may be interposed between the internal seat 34 and the support 5, as well as between the external seat 35 and the hub 4.

The internal seat 34 is delimited by a substantially cylindrical and smooth outer surface.

In use, respective lips of the second annular air seal 22 and of the second annular oil seal 28 rotate in contact with the outer surface of the internal seal 34.

The lip of the second annular air seal 22 has a diameter which is equal to the second sealing diameter D2. In the example shown, the lip of the second annular oil seal 28 has a diameter which is also equal to the second sealing diameter D2.

No vent passage is required in connection with the second annular oil seal 28, because any overpressure generated on the second annular oil seal 28 can be discharged into the external environment through the dust seal 29, without any failure.

During use, pressurized air is sent into the duct 10 of the support 5, and particularly into the transverse portion 13 of the duct 10. Thus, the pressurized air flows into the support 5 towards the axis A. Thereafter, the flow of pressurized air changes its direction and moves parallelly to the axis A along the axial portion 14 of the duct 10, away from the centerline of the vehicle and towards the wheel. When the annular chamber 15 is reached, pressurized air is distributed all around the axis A and, as the hub 4 rotates, passes into the conduit 16 of the hub 4. In particular, from the annular chamber 15, pressurized air flows parallelly to the axis A into the initial portion 17 of the conduit 16. The flow of pressurized air is now directed towards the exterior of the vehicle from the centerline thereof, i.e. towards the wheel. Thereafter, the flow of pressurized air is deviated into the intermediate portion 18, in which it flows transversely to the axis A and away from the axis A. Finally, in the final portion 19 of the conduit 16, the flow of pressurized air moves again parallel to the axis A, towards the centerline of the vehicle, to reach the tyre to be inflated.

Pressurized air thus follows a roughly U-shaped path, in which it is first directed into the support 5 towards the axis A, then it flows approximately parallelly to the axis A away from the centerline of the vehicle, and finally it flows again transversely to the axis A, but this time away from the axis A.

This path is particularly compact in an axial direction, i.e. in a direction parallel to the axis A. It is thus possible to install the connection device 1 also on existing vehicles, in which a limited space is available.

In particular, the path of the flow of pressurized air is located in a position closer to the centerline of the vehicle with respect to the bearings 6. In other words, when moving from the centerline of the vehicle towards the wheel along the axis A, the path of the flow of pressurized air between the support 5 and the hub 4 is arranged upstream of the bearings 6. Thus, there is no need to change the design of the portion of the support 5 that supports the bearings 6. The changes to be made to the existing components can therefore be kept to a minimum level.

Finally, only a single line for feeding pressurized air is required for each wheel, which makes the circuit particularly simple.

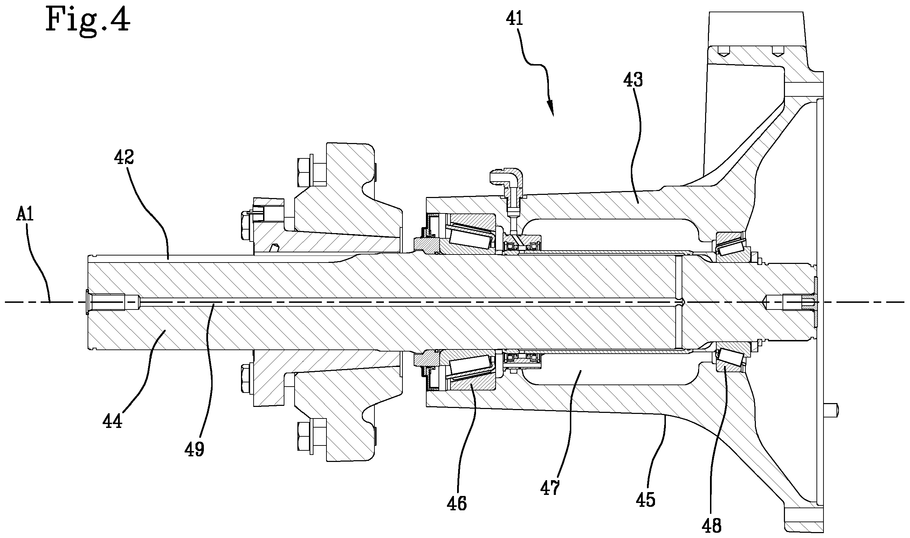

Figure 4 shows a connection device 41 according to an alternative embodiment, the connection device 41 being intended to be associated to a rear axle of an industrial or agricultural vehicle, such as a tractor.

The connection device 41 comprises a rotatable part 42 that, when installed on the vehicle, is fixed relative to a wheel of the vehicle. The rotatable part 42 may in particular comprise a bar axle 44, extending along an axis A1, intended to support the wheel. The connection device 41 further comprises a non-rotatable part 43, which is intended to be installed in a stationary position on the vehicle. The non-rotatable part 43 may for example comprise a bell-shaped support, commonly known as trumpet 45, for rotatingly supporting the bar axle 44. The trumpet 45 extends around the axis A1 and is provided with a hole inside which the bar axle 44 passes.

A bearing arrangement is interposed between the bar axle 44 and the trumpet 45, so as to allow the bar axle 44 to rotate relative to the trumpet 45. The bearing arrangement may comprise a peripheral bearing 46 and a central bearing 48, for example of the roller type, housed in a space 47 defined between the trumpet 45 and the bar axle 44. The space 47, in use, is filled with a lubricant substance, particularly oil, in order to keep the bearings 46, 48 lubricated. The peripheral bearing 46 is located in a position closer to the wheel than the central bearing 48. On the other hand, the central bearing 48 is located in a position closer to a centerline of the vehicle than the peripheral bearing 46.

The connection device 1 allows pressurized air to flow from the trumpet 45 to the bar axle 44 so that a tyre supported by the bar axle 44 may be inflated by a tyre inflation system.

To this end, the bar axle 44 is provided with an axial conduit 49, arranged along the axis A1, which, in use, is in fluid communication with the inside of the tyre supported by the bar axle 44. The axial conduit 49 may be a blind conduit, which is closed at its end closest to the centerline of the vehicle. The axial conduit 49 is instead open at its end closest to the wheel.

The bar axle 44 further has a plurality of transverse conduits 50, for example two or four transverse conduits 50, that are arranged transversely to the axis A1, for example perpendicularly to the axis A1. The transverse conduits 50 can be arranged radially relative to the axis A1. The transverse conduits 50 open into the axial conduit 49 and are intended to bring pressurized air present outside the bar axle 44 towards the axial conduit 49.

In order not to jeopardize mechanical resistance of the bar axle 44, the transverse conduits 50 are located close to the central bearing 48.

As the bar axle 44 rotates around the axis A1, the transverse conduits 50 are in fluid communication with an annular chamber 55 extending around the axis A1. The annular chamber 55 is defined externally of the bar axle 44, between the bar axle 44 and a sleeve 51 housed in the space 47. The sleeve 51 surrounds the bar axle 44 and is coaxial with the latter.

The annular chamber 55 is axially closed at opposite ends thereof. The sleeve 51 is positioned between the peripheral bearing 46 and the central bearing 48.

The sleeve 51 is configured to rotate around the axis A1 together with the bar axle 44.

In other words, as far as rotation around the axis A1 is concerned, the sleeve 51 and the bar axle 44 are fixed relative to each other.

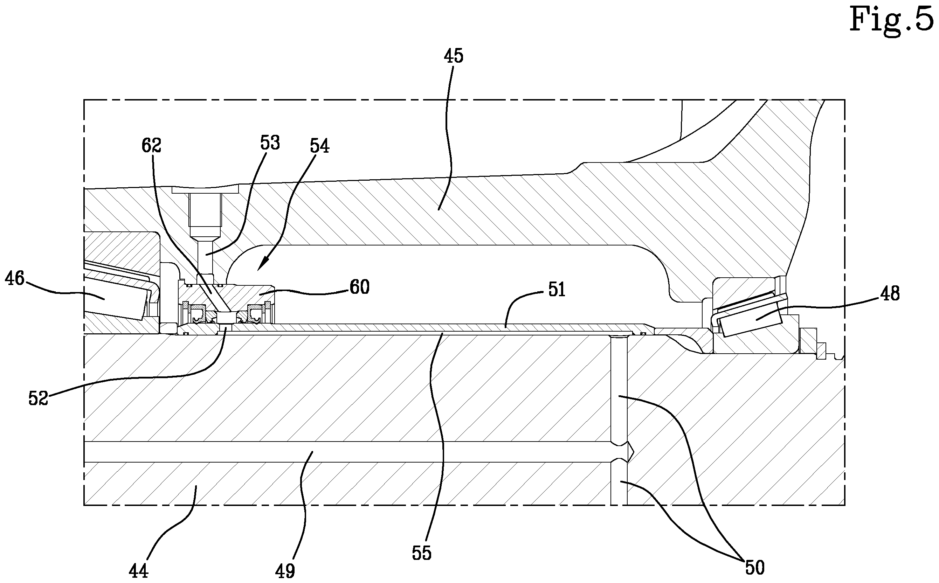

As shown in Figure 5, the sleeve 51 is provided with a transverse hole 52, arranged transversely, in particular perpendicularly, to the axis A1, so as to allow pressurized air to flow from the trumpet 45 towards the annular chamber 55.

The transverse hole 52 is in fluid communication with a duct 53, through which pressurized air may enter into the trumpet 45. The duct 53 is obtained in the trumpet 45 transversely, particularly perpendicularly, to the axis A1.

In order to avoid air leaks between the trumpet 45, which is in a stationary position, and the sleeve 51, which rotates together with the bar axle 44, a sealing arrangement 54 is interposed between the trumpet 45 and the sleeve 51.

The sealing arrangement 54 is located close to the peripheral bearing 46.

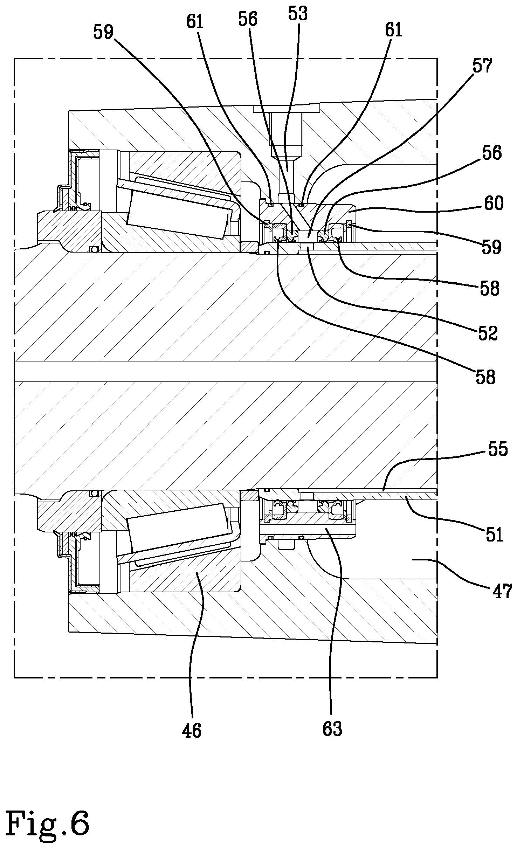

Details of the sealing arrangement 54 may be seen in Figure 6. The sealing arrangement 54 comprises a pair of annular air seals 56 between which a passage 57 is defined. The passage 57 opens into the transverse hole 52.

One of the annular air seals 56 is located closer to the centerline of the vehicle, whereas the other annular air seal 56 is located closer to the wheel. The annular air seals 56 are configured to avoid leaks of pressurized air when the latter passes from the trumpet 45 to the bar axle 44.

The sealing arrangement further 54 further comprises a pair of annular oil seals 58 between which the annular air seals 56 are interposed. The annular oil seals 58 are intended to prevent oil lubricating the bearings 46, 48 from contaminating the annular air seals 56.

The annular oil seals 58 may be of the rotary type.

The annular oil seals 58 are kept in a proper position by respective retaining rings 59, for example of the Seeger type. The retaining rings 59 are arranged at respective sides of the annular oil seals 58 that are opposite the sides of the annular oil seals 58 at which the annular air seals 56 are provided. Thus, when moving parallelly to the axis A1 from the peripheral bearing 46 to the central bearing 48, the following sequence of components is encountered: first a retaining ring 59, then an annular oil seal 58, then an annular air seal 56, then the passage 57, then the other annular air seal 56, the other annular oil seal 58 and finally the other retaining ring 59.

The retaining rings 59 prevent undesired displacement of the annular oil seals 58 and/or of the annular air seals 56 parallelly to the axis A1.

The annular oil seals 58 and the annular air seals 56 have respective sealing lips that are arranged in contact with an outer surface of the sleeve 51.

The annular oil seals 58 and the annular air seals 56 are supported by an annular seat 60 extending coaxially with the axis A1 and externally of the sleeve 51, so that the annular oils seals 58 and the annular air seals 56 are interposed between the annular seat 60 and the sleeve 51.

The annular seat 60 also has a pair of grooves inside which the retaining rings 59 are engaged.

The annular seat 60 is fixed relative to the trumpet 45. A pair of seal rings 61, for example of the O-ring type, are interposed between the annular seat 60 and the trumpet 45.

The annular seat 60 has a through hole 62, shown in Figure 5, extending from the duct 53 to the passage 57 so as to allow pressurized air to flow from the duct 53 to the passage 57.

The annular seat 60 may further have at least one lubricant passage 63 for causing the space 47 to communicate with the peripheral bearing 46, so that lubricating oil may pass from the space 47 towards the peripheral bearing 46 and lubricate the peripheral bearing 46.

In use, pressurized air enters the trumpet 45 via the duct 53. From the duct 53, the pressurized air continues to flow transversely to the axis A1 through the through hole 62, the passage 57 and the transverse hole 52. Thereafter, pressurized air flows parallelly to the axis A in the annular chamber 55, towards the centerline of the vehicle. From the annular chamber 55, the flow of pressurized air is directed inside the bar axle 44 transversely to the axis A1, by means of the transverse conduits 50. At this point, the flow of pressurized air passes into the axial conduit 49, in which it flows along the axis A1 towards the tyre to be inflated.

The connection device 41 has a particularly compact structure which allows it to the installed even on existing vehicles. To this end, only minor changes are required and there is no need to replace critical components of the vehicle.

## Claims

1. A connection device intended to be used in a vehicle having at least one wheel provided with a tyre, the connection device (1) comprising:
- a rotatable part (2) intended to be installed in a fixed position relative to the wheel, the rotatable part (2) extending around an axis (A);
- a non-rotatable part (3) for rotatingly supporting the rotatable part (2), the non-rotatable part (3) extending around said axis (A) and being at least partially surrounded by the rotatable part (2);
- an annular chamber (15) defined between the rotatable part (2) and the non-rotatable part (3), the annular chamber (15) allowing fluid communication between at least one conduit (16) provided in the rotatable part (2) and at least one duct (10) provided in the non-rotatable part (3), so that the tyre may be inflated by sending pressurized air from the non-rotatable part (3) to the rotatable part (2);
- a first annular sealing arrangement (11) and a second annular sealing arrangement (12) delimiting the annular chamber (15), the first annular sealing arrangement (11) being located at a first diameter (D1) around said axis (A), the second annular sealing arrangement (12) being located at a second diameter (D2) around said axis (A), the first diameter (D1) being different from the second diameter (D2), wherein the first annular sealing arrangement (11) comprises a first annular air seal (21) and the second annular sealing arrangement (12) comprises a second annular air seal (22), the first annular air seal (21) and the second annular air seal (22) at least partially delimiting the annular chamber (15), the first annular air seal (21) and the second annular air seal (22) being configured to prevent air leaks from the annular chamber (15), and said connection device (1) further comprising
- an annular dust seal (29) located radially externally of the second sealing arrangement (12) at an interface region between the non-rotatable component (3) and the rotatable component (2), so as to prevent dust from contaminating the second annular air seal (22)
**characterised in that** a lubricant chamber (31) is defined in a position adjacent to the annular dust seal (29), the lubricant chamber (31) being configured to contain a lubricant in order to keep the annular dust seal (29) lubricated.

2. A connection device according to claim 1, wherein the first diameter (D1) is smaller than the second diameter (D2), the second annular sealing arrangement (12) being located closer to a centerline of the vehicle than the first annular sealing arrangement (11).

3. A connection device according to claim 1, wherein the first annular sealing arrangement (11) further comprises a first annular oil seal (23), the first annular air seal (21) being interposed between the first annular oil seal (23) and the annular chamber (15).

4. A connection device according to claim 3, wherein a space (7) is defined between the rotatable part (2) and the non-rotatable part (3), said space (7) housing a bearing arrangement (6) allowing the rotatable part (2) to rotate relative to the non-rotatable part (3), the first annular oil seal (23) being configured to prevent oil contained in said space (7) and lubricating the bearing arrangement (6) from contaminating the first annular air seal (21).

5. A connection device according to claim 3, and further comprising a vent passage (27) for providing fluid communication between the first annular oil seal (23) and an external environment, in order to avoid overpressures on the first annular oil seal (23).

6. A connection device according to claim 3, wherein the first annular air seal (21) and the first annular oil seal (23) are interposed between an annular inner seat (24) and an annular outer seat (25), the annular inner seat (24) being fixed relative to the non-rotatable component (3), the annular outer seat (25) being fixed relative to the rotatable component (2).

7. A connection device according to claim 1, wherein the second annular sealing arrangement (12) further comprises a second annular oil seal (28) interposed between the lubricant chamber (31) and the second annular air seal (22) in order to prevent lubricant contained in the lubricant chamber (31) from contaminating the second annular air seal (22).

8. A connection device according to claim 1, wherein the second annular air seal (22) and the second annular oil seal (28) are interposed between an annular internal seat (34) and an annular external seat (35), the annular internal seat (34) being fixed relative to the non-rotatable component (3), the annular external seat (35) being fixed relative to the rotatable component (2).

9. A connection device according to claim 1, in which a path for pressurized air is defined, the path comprising at least a transverse portion (13) directed towards said axis (A) and obtained in the non-rotatable component (3), at least one axial portion (14, 17) substantially parallel to said axis (A) and located in a position adjacent to the annular chamber (15), and at least a further transverse portion (16), directed away from said axis (A) and obtained in the rotatable component (2).

10. A connection device according to claim 1, wherein the rotatable part (2) is a hub (4) of the wheel and the non-rotatable part (3) is a support (5) for rotatingly supporting the hub (4).

11. A connection device according to claim 1, wherein the axis (A) extends along a front axle of the vehicle.

## Patentansprüche

1. Verbindungsvorrichtung, die dazu vorgesehen ist, in einem Fahrzeug verwendet zu werden, das zumindest ein Rad aufweist, das mit einem Reifen ausgestattet ist, wobei die Verbindungsvorrichtung (1) umfasst:
- ein drehbares Teil (2), das dazu vorgesehen ist, in einer festen Position relativ zum Rad angebracht zu sein, wobei sich das drehbare Teil (2) um eine Achse (A) erstreckt;
- ein nicht drehbares Teil (3) zur drehenden Lagerung des drehbaren Teils (2), wobei sich das nicht drehbare Teil (3) um die Achse (A) erstreckt und zumindest teilweise vom drehbaren Teil (2) umgeben ist;
- eine ringförmige Kammer (15), die zwischen dem drehbaren Teil (2) und dem nicht drehbaren Teil (3) definiert ist, wobei die ringförmige Kammer (15) eine Fluidverbindung zwischen zumindest einer Leitung (16), die im drehbaren Teil (2) bereitgestellt ist, und zumindest einem Kanal (10), der im nicht drehbaren Teil (3) bereitgestellt ist, ermöglicht, sodass der Reifen durch Leiten von unter Druck stehender Luft vom nicht drehbaren Teil (3) zum drehbaren Teil (2) aufgepumpt werden kann;
- eine erste ringförmige Dichtanordnung (11) und eine zweite ringförmige Dichtanordnung (12), die die ringförmige Kammer (15) begrenzen, wobei die erste ringförmige Dichtanordnung (11) in einem ersten Durchmesser (D1) um die Achse (A) angeordnet ist, wobei die zweite ringförmige Dichtanordnung (12) in einem zweiten Durchmesser (D2) um die Achse (A) angeordnet ist, wobei sich der erste Durchmesser (D1) vom zweiten Durchmesser (D2) unterscheidet, wobei die erste ringförmige Dichtanordnung (11) eine erste ringförmige Luftdichtung (21) umfasst und die zweite ringförmige Dichtanordnung (12) eine zweite ringförmige Luftdichtung (22) umfasst, wobei die erste ringförmige Luftdichtung (21) und die zweite ringförmige Luftdichtung (22) die ringförmige Kammer (15) zumindest teilweise begrenzen, wobei die erste ringförmige Luftdichtung (21) und die zweite ringförmige Luftdichtung (22) dazu eingerichtet sind, einen Luftverlust aus der ringförmigen Kammer (15) zu verhindern, und wobei die Verbindungsvorrichtung (1) weiterhin umfasst:
- eine ringförmige Staubdichtung (29), die radial außerhalb der zweiten Dichtanordnung (12) in einem Übergangsbereich zwischen dem nicht drehbaren Teil (3) und dem drehbaren Teil (2) angeordnet ist, um zu verhindern, dass Staub die zweite ringförmige Luftdichtung (22) verschmutzt;
**dadurch gekennzeichnet, dass** eine Schmiermittelkammer (31) an einer Stelle neben der ringförmigen Staubdichtung (29) definiert ist, wobei die Schmiermittelkammer (31) dazu eingerichtet ist, ein Schmiermittel zu beinhalten, um die ringförmige Staubdichtung (29) geschmiert zu halten.

2. Verbindungsvorrichtung nach Anspruch 1, wobei der erste Durchmesser (D1) kleiner als der zweite Durchmesser (D2) ist, und wobei die zweite ringförmige Dichtanordnung (12) näher an einer Längsachse des Fahrzeugs angeordnet ist als die erste ringförmige Dichtanordnung (11).

3. Verbindungsvorrichtung nach Anspruch 1, wobei die erste ringförmige Dichtanordnung (11) weiterhin eine erste ringförmige Öldichtung (23) umfasst, wobei die erste ringförmige Luftdichtung (21) zwischen die erste ringförmige Öldichtung (23) und die ringförmige Kammer (15) eingefügt ist.

4. Verbindungsvorrichtung nach Anspruch 3, wobei ein Zwischenraum (7) zwischen dem drehbaren Teil (2) und dem nicht drehbaren Teil (3) definiert ist, wobei der Zwischenraum (7) eine Lageranordnung (6) aufnimmt, die es dem drehbaren Teil (2) ermöglicht, relativ zum nicht drehbaren Teil (3) zu drehen, wobei die erste ringförmige Öldichtung (23) dazu eingerichtet ist, zu verhindern, dass Öl, das im Zwischenraum (7) enthalten ist und die Lageranordnung (6) schmiert, die erste ringförmige Luftdichtung (21) verunreinigt.

5. Verbindungsvorrichtung nach Anspruch 3, weiterhin umfassend einen Lüftungskanal (27) zum Bereitstellen einer Fluidverbindung zwischen der ersten ringförmigen Öldichtung (23) und einer äußeren Umgebung, um Überdrücke auf die erste ringförmige Öldichtung (23) zu verhindern.

6. Verbindungsvorrichtung nach Anspruch 3, wobei die erste ringförmige Luftdichtung (21) und die erste ringförmige Öldichtung (23) zwischen einer ringförmigen inneren Aufnahme (24) und einer ringförmigen äußeren Aufnahme (25) angeordnet sind, wobei die ringförmige innere Aufnahme (24) relativ zum nicht drehbaren Teil (3) befestigt ist und die ringförmige äußere Aufnahme (25) relativ zum drehbaren Teil (2) befestigt ist.

7. Verbindungsvorrichtung nach Anspruch 1, wobei die zweite ringförmige Dichtanordnung (12) weiterhin eine zweite ringförmige Öldichtung (28) umfasst, die zwischen die Schmiermittelkammer (31) und die zweite ringförmige Luftdichtung (22) eingefügt ist, um zu verhindern, dass Schmiermittel, das in der Schmiermittelkammer (31) enthalten ist, die zweite ringförmige Luftdichtung (22) verunreinigt.

8. Verbindungsvorrichtung nach Anspruch 1, wobei die zweite ringförmige Luftdichtung (22) und die zweite ringförmige Öldichtung (28) zwischen einer ringförmigen inneren Aufnahme (34) und einer ringförmigen äußeren Aufnahme (35) eingefügt sind, wobei die ringförmige innere Aufnahme (34) relativ zum nicht drehbaren Teil (3) befestigt ist und die ringförmige äußere Aufnahme (35) relativ zum drehbaren Teil (2) befestigt ist.

9. Verbindungsvorrichtung nach Anspruch 1, bei der ein Durchgang für unter Druck stehende Luft definiert ist, wobei der Durchgang zumindest einen querverlaufenden Abschnitt (13), der in Richtung der Achse (A) ausgerichtet ist und im nicht drehbaren Teil (3) enthalten ist, zumindest einen axialen Abschnitt (14, 17), der im Wesentlichen parallel zur Achse (A) ist und in einer Position neben der ringförmigen Kammer (15) angeordnet ist, und zumindest einen weiteren querverlaufenden Abschnitt (16) umfasst, der von der Achse (A) hinweg ausgerichtet ist und im drehbaren Teil (2) enthalten ist, umfasst.

10. Verbindungsvorrichtung nach Anspruch 1, wobei der drehbare Teil (2) eine Nabe (4) des Rads ist und der nicht drehbare Teil (3) ein Träger (5) zur rotierenden Lagerung der Nabe (4) ist.

11. Verbindungsvorrichtung nach Anspruch 1, wobei sich die Achse (A) entlang einer Vorderachse des Fahrzeugs erstreckt.

## Revendications

1. Dispositif de liaison destiné à être utilisé dans un véhicule présentant au moins une roue pourvue d'un pneu, le dispositif de liaison (1) comprenant :
- une partie rotative (2) destinée à être installée dans une position fixe par rapport à la roue, la partie rotative (2) s'étendant autour d'un axe (A) ;
- une partie non rotative (3) permettant de supporter en rotation la partie rotative (2), la partie non rotative (3) s'étendant autour dudit axe (A) et étant au moins partiellement entourée par la partie rotative (2) ;
- une chambre annulaire (15) définie entre la partie rotative (2) et la partie non rotative (3), la chambre annulaire (15) permettant une communication fluidique entre au moins un conduit (16) disposé dans la partie rotative (2) et au moins un canal (10) situé dans la partie non rotative (3), de telle sorte que le pneu peut être gonflé par l'envoi d'air sous pression à partir de la partie non rotative (3) vers la partie rotative (2) ;
- un premier agencement annulaire d'étanchéité (11) et un deuxième agencement annulaire d'étanchéité (12) délimitant la chambre annulaire (15), le premier agencement annulaire d'étanchéité (11) étant situé à un premier diamètre (D1) autour dudit axe (A), le deuxième agencement annulaire d'étanchéité (12) étant situé à un deuxième diamètre (D2) autour dudit axe (A), le premier diamètre (D1) étant différent du deuxième diamètre (D2), le premier agencement annulaire d'étanchéité (11) comprenant un premier joint annulaire d'étanchéité à l'air (21) et le deuxième agencement annulaire d'étanchéité (12) comprenant un deuxième joint annulaire d'étanchéité à l'air (22), le premier joint annulaire d'étanchéité à l'air (21) et le deuxième joint annulaire d'étanchéité à l'air (22) délimitant au moins partiellement la chambre annulaire (15), le premier joint annulaire d'étanchéité à l'air (21) et le deuxième joint annulaire d'étanchéité à l'air (22) étant conçus pour empêcher des fuites d'air à partir de la chambre annulaire (15) et ledit dispositif de liaison (1) comprenant en outre
- un joint annulaire d'étanchéité à la poussière (29) situé radialement à l'extérieur du deuxième agencement annulaire d'étanchéité (12) au niveau d'une région d'interface entre l'élément non rotatif (3) et l'élément rotatif (2) de manière à empêcher une contamination du deuxième joint annulaire d'étanchéité à l'air (22) par la poussière,
**caractérisé en ce qu'**une chambre à lubrifiant (31) est définie en une position adjacente au joint annulaire d'étanchéité à la poussière (29), la chambre à lubrifiant (31) étant conçue pour contenir un lubrifiant afin de maintenir lubrifié le joint annulaire d'étanchéité à la poussière (29).

2. Dispositif de liaison selon la revendication 1, dans lequel le premier diamètre (D1) est plus petit que le deuxième diamètre (D2), le deuxième agencement annulaire d'étanchéité (12) étant plus proche d'une ligne centrale du véhicule que le premier agencement annulaire d'étanchéité (11).

3. Dispositif de liaison selon la revendication 1, dans lequel le premier agencement annulaire d'étanchéité (11) comprend en outre un premier joint annulaire d'étanchéité à l'huile (23), le premier joint annulaire d'étanchéité à l'air (21) étant interposé entre le premier joint annulaire d'étanchéité à l'huile (23) et la chambre annulaire (15).

4. Dispositif de liaison selon la revendication 3, dans lequel un espace (7) est défini entre la partie rotative (2) et la partie non rotative (3), ledit espace (7) logeant un agencement de palier (6) permettant la rotation de la partie rotative (2) par rapport à la partie non rotative (3), le premier joint annulaire d'étanchéité à l'huile (23) étant conçu pour empêcher l'huile contenue dans ledit espace (7) et lubrifiant l'agencement de palier (6) de contaminer le premier joint annulaire d'étanchéité à l'air (21).

5. Dispositif de liaison selon la revendication 3 et comprenant en outre un passage d'évent (27) pour assurer une communication fluidique entre le premier joint annulaire d'étanchéité à l'huile (23) et un environnement externe afin d'éviter des surpressions sur le premier joint annulaire d'étanchéité à l'huile (23).

6. Dispositif de liaison selon la revendication 3, dans lequel le premier joint annulaire d'étanchéité à l'air (21) et le premier joint annulaire d'étanchéité à l'huile (23) sont interposés entre un siège annulaire interne (24) et un siège annulaire externe (25), le siège annulaire interne (24) étant fixe par rapport à l'élément non rotatif (3), le siège annulaire externe (25) étant fixe par rapport à l'élément rotatif (2).

7. Dispositif de liaison selon la revendication 1, dans lequel le deuxième agencement annulaire d'étanchéité (12) comprend en outre un deuxième joint annulaire d'étanchéité à l'huile (28) interposé entre la chambre à lubrifiant (31) et le deuxième joint annulaire d'étanchéité à l'air (22) afin d'empêcher le lubrifiant contenu dans la chambre à lubrifiant (31) de contaminer le deuxième joint annulaire d'étanchéité à l'air (22).

8. Dispositif de liaison selon la revendication 1, dans lequel le deuxième joint annulaire d'étanchéité à l'air (22) et le deuxième joint annulaire d'étanchéité à l'huile (28) sont interposés entre un siège annulaire interne (34) et un siège annulaire externe (35), le siège annulaire interne (34) étant fixe par rapport à l'élément non rotatif (3), le siège annulaire externe (35) étant fixe par rapport à l'élément rotatif (2).

9. Dispositif de liaison selon la revendication 1, dans lequel un trajet pour l'air sous pression est défini, le trajet comprenant au moins une partie transversale (13) dirigée vers ledit axe (A) et obtenue dans l'élément non rotatif (3), au moins une partie axiale (14, 17) substantiellement parallèle audit axe (A) et située dans une position adjacente à la chambre annulaire (15) et au moins une autre partie transversale (16), dirigée en s'écartant dudit axe (A) et obtenue dans l'élément rotatif (2).

10. Dispositif de liaison selon la revendication 1, dans lequel la partie rotative (2) est un moyeu (4) de la roue et la partie non rotative (3) est un support (5) pour le support rotatif du moyeu (4).

11. Dispositif de liaison selon la revendication 1, dans lequel l'axe (A) s'étend le long de l'essieu avant du véhicule.
